# EUROPÄISCHE PATENTSCHRIFT

(11) **EP 1 621 038 B1**
(45) Veröffentlichungstag und Bekanntmachung des Hinweises auf die Patenterteilung: **04.10.2006**
(21) Anmeldenummer: 04729657.9
(22) Anmeldetag: 27.04.2004
(51) Int. Cl.: H04Q 7/38, H04L 12/56

(54) **VERFAHREN UND VORRICHTUNG ZUM ZWISCHENSPEICHERN VON TEILNEHMERDATEN BEI EINEM ORTSWECHSEL EINES MOBILEN TEILNEHMERS INNERHALB EINES MOBILEN KOMMUNIKATIONSNETZES**
METHOD AND DEVICE FOR THE INTERMEDIATE STORAGE OF SUBSCRIBER DATA DURING THE RELOCATION OF A MOBILE SUBSCRIBER WITHIN A MOBILE COMMUNICATION NETWORK
PROCEDE ET DISPOSITIF POUR STOCKER TEMPORAIREMENT DES DONNEES D'ABONNE EN CAS DE RELOCALISATION D'UN ABONNE MOBILE A L'INTERIEUR D'UN RESEAU DE COMMUNICATION MOBILE

(30) Priorität: 05.05.2003 DE 10319982
(43) Veröffentlichungstag der Anmeldung: 01.02.2006
(73) Patentinhaber: SIEMENS AKTIENGESELLSCHAFT, 80333 München (DE)
(72) Erfinder: BORCIC, Sandra-Agata, 10000 Zagreb (HR); BRANCO, Richard, A-2231 Strasshof (AT); PAULIS, Herbert, A-1050 Wien (AT)
(86) Internationale Anmeldenummer: PCT/EP2004/050613
(87) Internationale Veröffentlichungsnummer: WO 2004/100591

(56) Entgegenhaltungen:
- "Digital cellular telecommunications system (Phase 2+); Universal Mobile Telecommunications System (UMTS); General Packet Radio Service (GPRS) service description; Stage 2 (3GPP TS 23.060 version 5.5.0 Release 5); ETSI TS 123 060" ETSI STANDARDS, EUROPEAN TELECOMMUNICATIONS STANDARDS INSTITUTE, SOPHIA-ANTIPO, FR, Bd. 3-SA2, Nr. V550, März 2003 (2003-03), XP014007574 ISSN: 0000-0001 in der Anmeldung erwähnt
- ALCATEL: "Principles of User Data Retrieve at SRNS Relocation and GSMUMTS Hand-Over for IP domain; TSG-RAN WORKING GROUP 3 MEETING 4" TSG-RAN WORKING GROUP 3 MEETING 4, [Online] 1. Juni 1999 (1999-06-01), - 4. Juni 1999 (1999-06-04) Seiten 1-11, XP002291441 WARWICK, UK Gefunden im Internet: URL:http://www.3gpp.org/ftp/tsg_ran/WG3_Iu /TSGR3_04/Docs/Pdf/r3-99437.pdf> [gefunden am 2004-08-05]

## Beschreibung

Die Erfindung betrifft ein Verfahren und eine Vorrichtung zum Zwischenspeichern von Teilnehmerdaten bei einem Ortswechsel eines mobilen Teilnehmers innerhalb eines mobilen Kommunikationsnetzes.

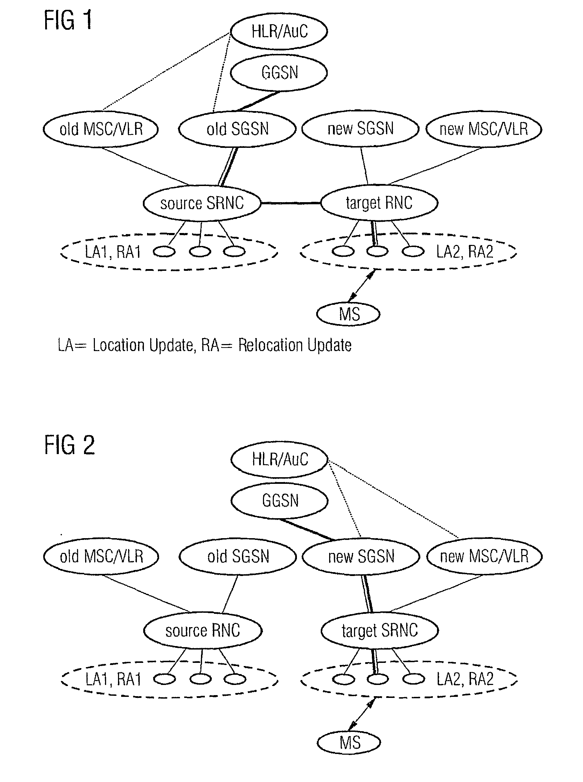

Im Zuge eines Ortswechsels eines UMTS/GPRS-Mobilfunkteilnehmers muss fallweise der verkehrsführende Vermittlungsnetzknoten (SGSN = Serving GPRS Support Node) gewechselt werden. Der folgende in Figur 1 gezeigte Ausschnitt aus dem Standard (3GPP TS 23.060) stellt die Situation schematisch dar.

Die Figur 1 zeigt das Weiterleiten von Teilnehmerdaten (user data routing), wenn die bedienende Netzsteuereinheit (SRNC = Serving Radio Network Controller) und die Zielnetzsteuereinheit (TRNC = Target Radio Network Controller) mit unterschiedlichen GPRS (General Packet Radio Service) unterstützenden Vermittlungsnetzknoten (SGSN = Serving GPRS Support Node) in verbindung stehen, bevor ein Ortswechsel (SRNS = Serving Radio Network Subsystem Relocation) stattfindet. Die Figur 2 zeigt das Weiterleiten von Teilnehmerdaten nach der Prozedur "SRNS Relocation" und wenn die Prozedur "Routing Area Update" beendet ist. In den dargestellten Fällen ist die Mobilstation (MS) im sogenannten Status "PMM-CONNECTED".

Vor die Prozeduren "SRNS Relocation" und "Routing Area Update" ist die Mobilstation an der "alten" SGSN registriert. Die Ursprungs-RNC arbeitet als bedienende RNC (serving RNC). Nach den Prozeduren "SRNS Relocation" und "Routing Area Update" (RA = Routing Area) - wie in Figur 2 angedeutet - ist die Mobilstation an der "neuen" SGSN registiert. Die Mobilstation ist gegenüber der neuen SGSN im Status "PMM-CONNECTED" und die Ziel-RNC arbeitet als bedienende RNC (serving RNC).

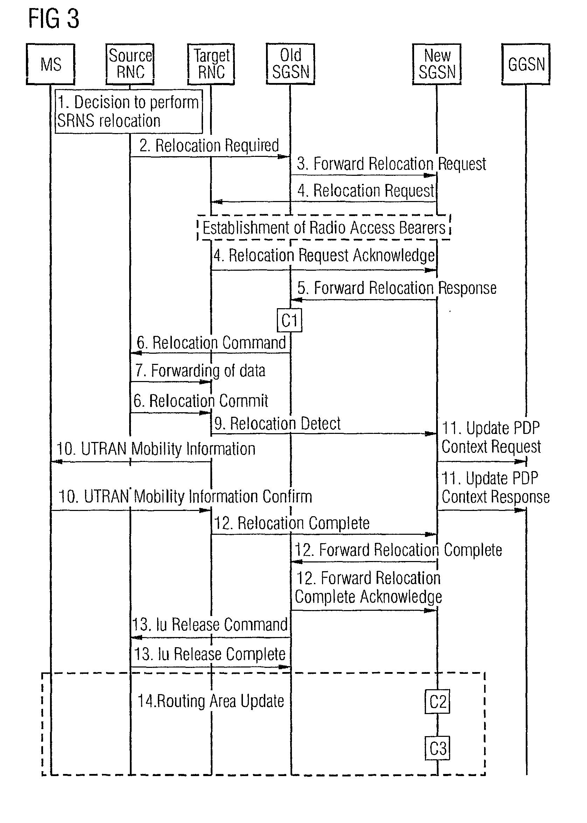

Dabei gibt es ein "Loch", in dem bereits Daten über die neue Verbindung übertragen werden (Message 7 in Figur 3), obwohl dort die Teilnehmerdaten noch nicht bekannt sind. Dies ist für die Datenübertragung an sich kein Problem und ohne Bedeutung, für Lawful Interception (LI) (= richterliches Abhören) ergibt sich dadurch jedoch ein Problem, da erst dann, wenn die Teilnehmerdaten vollständig übertragen wurden (Messageblock 14 in Figur 3), entschieden werden kann, ob der Teilnehmer zu überwachen ist oder nicht. Bis dahin sind jedoch bereits Daten übertragen worden, die dann für die Überwachung verloren sind.

Die Aufgabe der Erfindung ist, die oben beschriebenen Nachteile zu überwinden.

Die Aufgabe wird durch die Merkmale eines Verfahrens und eines Vermittlungsnetzknotens gemäß den unabhängigen Patentansprüchen. Vorteilhafte Weiterbildungen der Erfindung sind in weiteren abhängigen Patentansprüchen gekennzeichnet.

Ein wesentlicher Aspekt der Erfindung besteht in einem Verfahren zum Zwischenspeichern von Datenpaketen bei einem Ortswechsel eines mobilen Teilnehmers innerhalb eines Kommunikationsnetzes, wobei die Datenpakete nach Wechsel des Datenübertragungsweges von einem ursprünglich für den Teilnehmer zuständigen Vermittlungsnetzknoten zu einem für den Teilnehmer zuständig werdenden Vermittlungsnetzknoten im letzteren Vermittlungsnetzknoten zwischengespeichert werden, bis die für den neuen Datenübertragungsweg vorgesehenen Teilnehmerdaten am letzteren Vermittlungsnetzknoten vorliegen.

Ein weiterer Aspekt der Erfindung besteht in Ausgestaltung eines Netzknotens, geeignet zum Zwischenspeichern von Datenpaketen bei einem Ortswechsel eines mobilen Teilnehmers in nerhalb eines Kommunikationsnetzes aufweisend Mittel zum Zwischenspeichern von Datenpaketen nach Wechsel des Datenübertragungsweges von einem ursprünglich für den Teilnehmer zuständigen Vermittlungsnetzknoten zum genannten Vermittlungsnetzknoten, solange bis die für den neuen Datenübertragungsweg vorgesehenen Teilnehmerdaten vorliegen.

Weitere Details der Erfindung werden anhand eines Ausführungsbeispiels unter Bezugnahme auf eine Zeichnung näher erläutert. Dabei zeigt die Zeichnung:
Figur 1 - wie eingangs beschrieben - eine schematische Netzkonstellation für das Weiterleiten von Teilnehmerdaten,
Figur 2 - wie eingangs beschrieben - eine schematische Netzkonstellation nach Ende der Relocation-Prozedur und
Figur 3 ein Nachrichtenflußdiagramm für die oben genannte Relocation-Prozedur.

Die eingangs beschriebenen Figuren 1, 2 zeigen schematische Netzkonstellationen mit untereinander verbundenen Netzelementen HLR/AuC, GGSN, old MSC/VLR, old SGSN, new SGSN, new MSC/VLR, source (S)RNC, target (S)RNC, MS (Mobil Station), LA1 (LA = Location Update), LA2, RA1 (RA = Relocation Update), RA2. Die Bezugszeichen entsprechen den in der Mobilfunktechnik üblicherweise verwendeten Abkürzungen für Mobilfunknetzelemente. Die breitere Linien zeigt die Verbindung vom der Mobil Station MS durch das Kommunikationsnetz. In der Figur 3 werden dieselben Bezugszeichen/Abkürzungen verwendet. Die zwischen den Netzelementen übertragenen Nachrichten sind mit Nummern und englischsprachigen Erläuterungen gekennzeichnet, die im Zusammenhang mit Mobilfunknetzen üblicherweise verwendete, feststehende Ausdrücke sind.

In Figur 3 sieht die Lösung nun vor, in einer frühen Phase jeder Relocation-Prozedur auf dem neuen SGSN ein Buffern bzw.

Zwischenspeichern aller Pakete einzuleiten, unabhängig davon, ob der jeweilige Subscriber überwacht wird oder nicht, da diese Information noch nicht zur Verfügung steht. Mögliche Triggerpunkte für das Buffern der Daten wären die Meldungen (Message) "Forward Relocation Request" (3), "Relocation Request Acknowledge" (4) und "Relocation Detect" (9). Welcher dann tatsächlich Verwendung findet, ist implementierungsabhängig, jedoch sollte die Bereitschaft zum Speichern so früh als möglich hergestellt werden.

Die Information, ob tatsächlich zu überwachen ist, steht erst nach Ende der Relocation-Prozedur innerhalb der darauf folgenden RAU-Prozedur (14) (RAU = Relocation Area Update) zur Verfügung, wenn die Userdaten übertragen wurden. Bis dahin werden alle Pakete gepuffert. Ist der Subscriber (= Teilnehmer) zu überwachen, dann sind seine Pakete nicht verloren gegangen und können weiter verwertet werden. Ist er nicht zu überwachen, dann werden die Pakete weggeworfen. (Nach Messageblock 14 in Figur 3) Die durchschnittliche Dauer des Vorganges beträgt ca. 5700 ms, aus Sicherheitsgründen wurde die Lösung so dimensioniert, dass eine Bufferzeit von 15 s vorgehalten wird, um sicherzustellen, dass auch bei Verzögerungen keine Daten zu verlieren.

## Patentansprüche

1. Verfahren zum Zwischenspeichern von Datenpaketen bei einem Ortswechsel eines mobilen Teilnehmers (MS) innerhalb eines Kommunikationsnetzes **dadurch gekennzeichnet,**
**dass** die Datenpakete nach Wechsel des Datenübertragungsweges von einem ursprünglich für den Teilnehmer zuständigen Vermittlungsnetzknoten (Old SGSN) zu einem für den Teilnehmer zuständig werdenden Vermittlungsnetzknoten (New SGSN) im letzteren Vermittlungsnetzknoten zwischengespeichert werden, bis die für den neuen Datenübertragungsweg vorgesehenen Teilnehmerdaten am letzteren Vermittlungsnetzknoten vorliegen.

2. Verfahren nach Anspruch 1 **dadurch gekennzeichnet, dass** das Zwischenspeichern der Datenpakete unabhängig davon, ob ein Teilnehmer überwacht wird oder nicht, eingeleitet wird.

3. Verfahren nach Anspruch 1 oder 2 **dadurch gekennzeichnet, dass** für das Zwischenspeichern der Datenpunkte sogenannte Triggerpunkte mit Hilfe der Nachrichten "Forward Relocation Request" (3), "Relocation Request Acknowledge" (4) oder "Relocation Detect" (9) eingeführt werden.

4. Verfahren nach einem der Ansprüche 1 bis 3 **dadurch gekennzeichnet, dass** nach der Übertragung der Teilnehmerdaten, die zwischengespeicherten Datenpakete gelöscht werden, wenn der Teilnehmer nicht überwacht werden soll.

5. Vermittlungsnetzknoten (New SGSN) zum Zwischenspeichern von Datenpaketen bei einem Ortswechsel eines mobilen Teilnehmers (MS) innerhalb eines Kommunikationsnetzes aufweisend Mittel zum Zwischenspeichern von Datenpaketen nach Wechsel des Datenübertragungsweges von einem ursprünglich für den Teilnehmer zuständigen Vermittlungsnetzknoten (Old SGSN) zum genannten Vermittlungsnetzknoten (New SGSN), solange bis die für den neuen Datenübertragungsweg vorgesehenen Teilnehmerdaten vorliegen.

## Claims

1. Method for intermediate storage of data packets during a relocation of a mobile subscriber (MS) within a communication network, **characterised in that** the data packets, once the data transmission path has moved from a switching network node originally responsible for the subscriber (old SGSN) to a switching network node which is to become responsible for the subscriber (new SGSN) are stored in the last switching network node until the subscriber data provided for the new data transmission path is located in the last switching network node.

2. Method according to claim 1 **characterised in that** the intermediate storage of the data packets is initiated independently of whether the subscriber is to be monitored or not.

3. Method according to claim 1 or 2, **characterised in that**, for the intermediate storage of the data packets so-called trigger points are introduced with the aid of the messages "Forward Relocation Request" (3), "Relocation Request Acknowledge" (4) or "Relocation Detect" (9).

4. Method in accordance with one of the claims 1 to 3, **characterised in that**, after the transmission of the subscriber data, the buffered data packets are deleted if the subscriber is not to be monitored.

5. Switching network node (New SGSN) for intermediate storage of data packets during a relocation of a mobile subscriber (MS) within a communication network featuring means for intermediate storage of data packets after the transmission path has moved from a switching network node originally responsible for the subscriber responsible (Old SGSN) to said switching network node (New SGSN) until such time as the subscriber data provided for the new data transmission path is available.

## Revendications

1. Procédé pour stocker temporairement des paquets de données en cas de relocalisation d'un abonné mobile (MS) à l'intérieur d'un réseau de communication, **caractérisé en ce**
**que** les paquets de données, après le changement de la voie de transmission des paquets, sont stockés temporairement, d'un noeud de réseau de commutation (Old SGSN) au départ responsable pour l'abonné vers le noeud de réseau de commutation (New SGSN) devenant responsable pour l'abonné, dans ce dernier noeud de réseau de commutation, jusqu'à ce que les données d'abonné prévues pour la nouvelle voie de transmission de données soient présentes sur le noeud de réseau de commutation mentionné en dernier.

2. Procédé selon la revendication 1, **caractérisé en ce que** le stockage temporaire des paquets de données est initialisé indépendamment du fait si un abonné est surveillé ou non.

3. Procédé selon la revendication 1 ou 2, **caractérisé en ce que** pour le stockage temporaire des paquets de données des dits points de déclenchement sont introduits à l'aide des messages « Forward Relocation Request » (3), « Relocation Request Acknowledge » (4) ou « Relocation Detect » (9).

4. Procédé selon l'une quelconque des revendications 1 à 3, **caractérisé en ce qu'**après la transmission des données d'abonné, les paquets de données stockés temporairement sont supprimés lorsque l'abonné ne doit pas être surveillé.

5. Noeud de réseau de commutation (New SGSN) pour stocker temporairement des paquets de données en cas de relocalisation d'un abonné mobile (MS) à l'intérieur d'un réseau de communication, présentant des moyens pour stocker temporairement des paquets de données après le changement de la voie de transmission des paquets, d'un noeud de réseau de commutation (Old SGSN) au départ responsable pour l'abonné vers ledit noeud de réseau de commutation (New SGSN), jusqu'à ce que les données d'abonné prévues pour la nouvelle voie de transmission de données soient présentes.
